# EUROPEAN PATENT SPECIFICATION

(11) **EP 2 060 889 B1**
(45) Date of publication and mention of the grant of the patent: **04.01.2012**
(21) Application number: 08159569.6
(22) Date of filing: 03.07.2008
(51) Int. Cl.: G01J 5/02

(54) **Detachable probe cover for ear thermometer and manufacturing method thereof**
Abnehmbare Sondenabdeckung für ein Ohrthermometer und Herstellungsverfahren dafür
Couvercle de sonde amovible pour thermomètre à oreille et son procédé de fabrication

(30) Priority: 09.11.2007 TW 96142339
(43) Date of publication of application: 20.05.2009
(73) Proprietor: Actherm Inc., Hsinchu 30078 (TW)
(72) Inventor: Hsieh, Chih-Wei, 30078, Hsinchu (TW)
(74) Representative: Lang, Christian

(56) References cited:
- EP-A- 1 262 753
- WO-A-95/00067
- WO-A-2004/063687
- DE-A1- 10 336 436
- US-A- 5 088 834
- US-A1- 2005 027 168
- US-B1- 6 224 256
- US-B1- 6 647 284

## Description

### BACKGROUND OF THE INVENTION

### 1. Technical Field

The present invention relates to a detachable probe cover for an ear thermometer.

### 2. Description of Related Art

In the known technical field, a cover for sheathing a temperature probe of an ear thermometer may be referred to the disclosure of some patents such as U.S. Pat. No. 5,088,834 and U.S. Pat. No.6,022,140. The prior disclosure relates to a unitary probe cover that is equipped with a rim at a proximal portion thereof to couple a retention ears on the ear thermometer probe so as to fix the probe cover onto the ear thermometer probe. Further, a side wall of the probe cover is preferentially deformed in reaction to the ear thermometer probe straightening a surface of the cover. However, since the side wall is made of a material having limited elasticity, it can also provide limited effect on relaxing manufacturing tolerances. That is, the surface at a distal end portion of the cover can not be efficiently expanded, resulting in inaccurate measuring results of the ear thermometer. Furthermore, U.S. Pat. No. 5,163,418, U.S. Pat. No. 5,906,437, U.S. Pat. No. 6,371,639 and U.S. Pat. No.6,647,284 all provide probe covers made of thin film. Such probe covers have some disadvantage, such as complex assembling process, inartistic appearance, wrinkled surfaces, and causing uncomfortableness to ears. Moreover, U.S. Pat. No. 2005/0027168 discloses a disposable otoscopic tip element used in conjunction with the otoscope through complex assembling process; E.P. Pat. No. 1,262,753 discloses an infrared ray clinical thermometer; however, the detailed technical features of the probe cover remain unclear; WO 95/00067 discloses an electronic thermometer probe cover which is unable to enhanced the stability of fitting the probe cover in a simple structure; U.S. Pat. No. 6,224,256 discloses a cover for a medical probe; however, the detailed combination mechanism between the mounting ring and the tubular membrane is unclear; WO 2004/063687 discloses tympanic thermometer; however, the detailed technical features of the probe cover remain unclear; D.E. Pat. No.103,36,436 discloses a disposable protective cap which is unable to enhanced the stability of fitting the probe cover in a simple structure. To remedy the aforementioned defects of the conventional probe covers for ear thermometers, it is desired to improve the prior arts with a probe cover, which can be finely adjusted when being mounted onto a probe or an ear thermometer and then has a portion corresponding to a measuring end of the probe smoothened so as to allow infrared rays stably pierce therethrough in order to ensure stableness and accuracy of measuring results of the ear thermometer.

### SUMMARY OF THE INVENTION

In the attempt to remedy the imperfectness of the prior arts, the present invention provides a detachable probe cover for an ear thermometer as disclosed in claim 1.

Thus, it is one objective of the present invention to provide a probe cover for an ear thermometer, in which the probe cover can be automatically aligned so as to be easily mounted on and not easily take off a measuring probe of the ear thermometer.

It is another objective of the present invention to provide a probe cover for an ear thermometer, in which when the probe cover is mounted onto a measuring probe of the ear thermometer, the probe cover is smoothened so as to facilitate more stable and more accurate measuring results of the ear thermometer.

### BRIEF DESCRIPTION OF THE DRAWINGS

The invention as well as a preferred mode of use, further objectives and advantages thereof, will best be understood by reference to the following detailed description of an illustrative embodiment when read in conjunction with the accompanying drawings, wherein:
Fig. 1A is a perspective view of a first embodiment of the present invention, showing a probe cover for an ear thermometer having protrusions.
Fig. 1B is a perspective view of a second embodiment of the present invention, showing a probe cover for an ear thermometer having a protrudent ring.
Fig. 2A is a perspective view of a measuring probe of the ear thermometer equipped with a combining mechanism of an annular structure according to the first or the second embodiment of the present invention.
Fig. 2B is a perspective view of a measuring probe of the ear thermometer equipped with a combining mechanism formed as protrudent members according to the second embodiment of the present invention.
Fig. 3A is a sectional view of a probe cover mounted on a measuring probe of an ear thermometer according the first or the second embodiment of the present invention.
Fig. 3B is a partially enlarged view of Part A of Fig. 3A for illustrating the probe cover mounted on the measuring probe of the ear thermometer according the first or second embodiment of the present invention.
Fig. 4 is an assembled view of the probe cover according to the first or the second embodiment of the present invention.

### DETAILED DESCRIPTION OF THE PREFERRED EMBODIMENT

While the present invention discloses a probe cover for an ear thermometer, it is to be stated first of all that the detailed manufacturing or processing procedures of the ear thermometer have been familiar to people skilled in the art and need not be discussed at length herein. Meantime, while the accompanying drawings are provided for the purpose of illustration, it is to be understood that the drawings are directed to the characteristics of the present invention and need not to be made in scale.

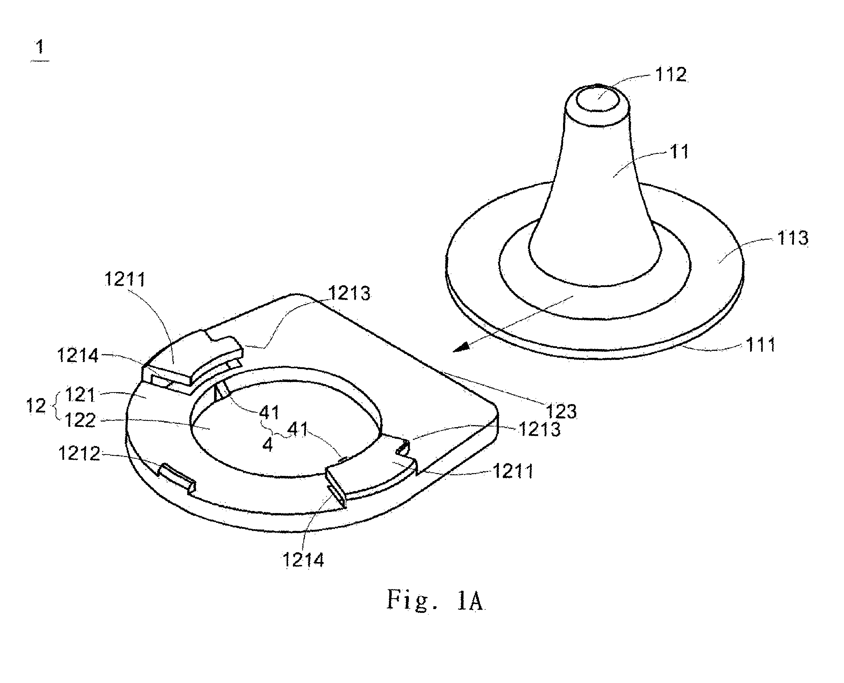

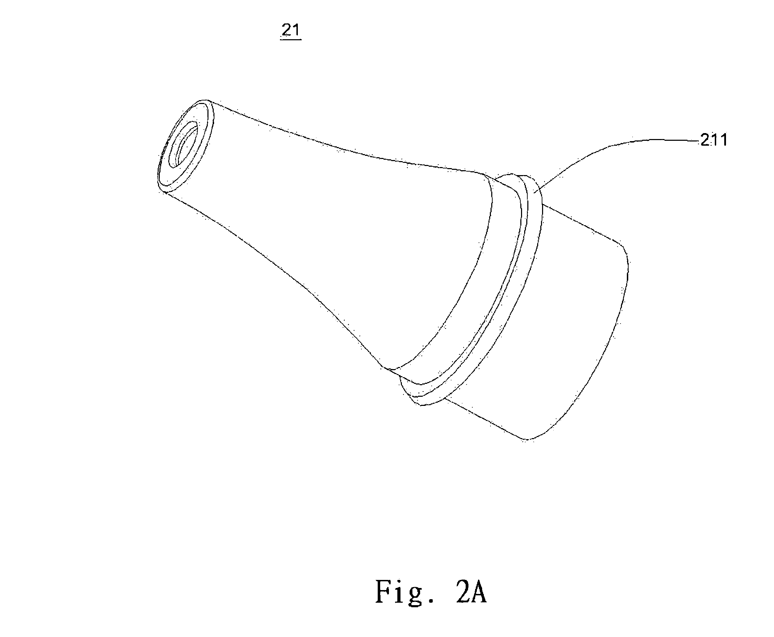

Please refer to Fig. 1A. The first embodiment of the present invention is a probe cover 1 for an ear thermometer. The probe cover 1 comprises a main body 11, a base 12, an open end 111, a closed end 112, a flange 113, a base plate 121, an opening 122, and protrusions 41. Therein, the probe cover 1 is for being mounted onto a measuring probe 21 of the ear thermometer. Please refer to both Fig. 1A and Fig. 2A, wherein a combining mechanism 211 of the ear thermometer is disposed at the bottom of the measuring probe 21 of the ear thermometer is disposed at the bottom of the measuring probe 21 of the ear thermometer. The combining mechanism 211 of the ear thermometer can be formed as an annular structure. The combining mechanism 211 of the ear thermometer achieves the combination between the probe cover 1 and the measuring probe 21 of the ear thermometer when the probe cover 1 is mounted onto the measuring probe 21 of the ear thermometer. More particularly, the combining mechanism 211 of the ear thermometer disposed at the bottom of the measuring probe 21 of the ear thermometer can be inlaid between the opening 122 formed at the center of the base plate 121 and the protrusions 41 of the base 12 of the probe cover 1 so as to achieve the combination between the probe cover 1 and the measuring probe 21.

The above-mentioned main body 11 is of a hollow structure and is made of plastic in one piece construction. The main body 11 has an open end 111 and a closed end 112 opposite to the open end 111 while the hollow structure of the main body 11 has a diameter gradually reducing from the open end 111 toward the closed end 112 so that the hollow structure of the main body 11 is shaped as a short truncated cone. The main body 11 can be made of polyethylene (PE), polypropylene (PP), polycarbonate (PC), polystyene (PS), poly ethylene terephthalate (PET) or poly vinyl chloride (PVC) where infrared rays can be transmitted through. The closed end 112 is a film wherethrough the measuring probe 21 of the ear thermometer receives a radiation wave (i.e. an infrared region) emitted by a human body. The hollow structure of the main body 11 made of plastic has a thickness decreasing gradually from the open end 111 toward the closed end 112. Therefore, the closed end 112 is the thinnest portion of the probe cover 1.

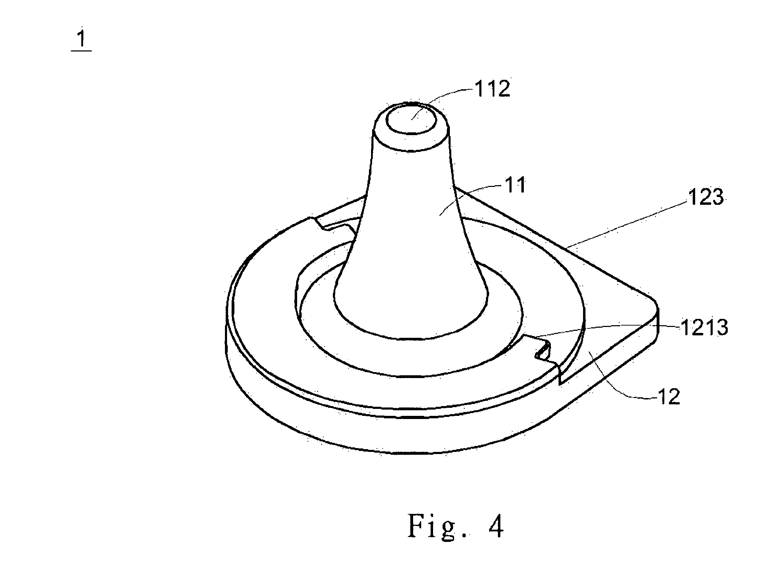

The above-mentioned main body 11 has at least one of said flange 113 which is radially extended outward from the open end 111. The flange 113 can be a seamless integral flange 113 or a sectioned flange 113 with seams or intervals thereon, wherein the flange 113 formed as a seamless integral flange 113 is most preferred. The above-mentioned base 12 comprises a base plate 121, a guiding edge 123, and an opening 122 which is formed at a center of the base plate 121. When the main body 11 is inlaid into the base 12, the opening 122 formed at the center of the base plate 121 is positionally corresponding to the open end 111 of the main body 11. Besides, the base plate 121 further comprises a pair of retaining recesses 1211 and a pair of entrances 1213, wherein each entrance 1213 is disposed at one end of each retaining recess 1211. Therein, the pair of retaining recesses 1211 are symmetrically disposed on the base plate 121. When the main body 11 is inlaid in the base 12, the flange 113 of the main body 11 is allowed to enter and to be inlaid in the base 12 through the entrances 1213 of the retaining recesses 1211. Furthermore, the distance between one of the entrances 1213 of one of the retaining recesses 1211 to another one of the entrances 1213 of another one of the retaining recesses 1211 is smaller than the maximum diameter of the flange 113 of the main body 11, so that the flange 113 of the main body 11 can be secured at the base 12 after the flange 113 of the main body 11 enters the base 12. In addition, the distance between two rear ends 1214 of the retaining recesses 1211 is smaller than the distance between the pair of entrances 1213, thereby restraining the flange 113 of the inlaid main body 11 from excessively moving. The rear ends 1214 of the retaining recesses 1211 can be such extended that the two retaining recesses 1211 are connected mutually (as shown in Fig. 4), so that when the flange 113 of the main body 11 is inlaid in the base 12, the main body 11 is allowed to slightly shift its position with respect to the opening 122. Thereby, when the probe cover 1 is to be mounted onto the measuring probe 21 of the ear thermometer, since the main body 11 is allowed to slightly shift its position, the probe cover 1 can be smoothly mounted onto the measuring probe 21 of the ear thermometer.

The above-mentioned base plate 121 of the base 12 can be further provided with at least one block 1212 for additionally restraining the flange 113 of the main body 11 from excessively moving. On the other hand, the base 12 further comprises a guiding edge 123 which directionally guides the probe cover 1 when the probe cover 1 is to be assembled into the base 12.

The pair of retaining recesses 1211 and the base plate 121 can be integrally formed in one piece construction or can be assembled mutually, wherein it is most preferred that the pair of retaining recesses 1211 and the base plate 121 are integrally formed in one piece construction. Furthermore, the pair of retaining recesses 1211 and the base plate 121 of the base 12 can be assembled mutually via an adhesive fixing process or a heat-melting fixing process.

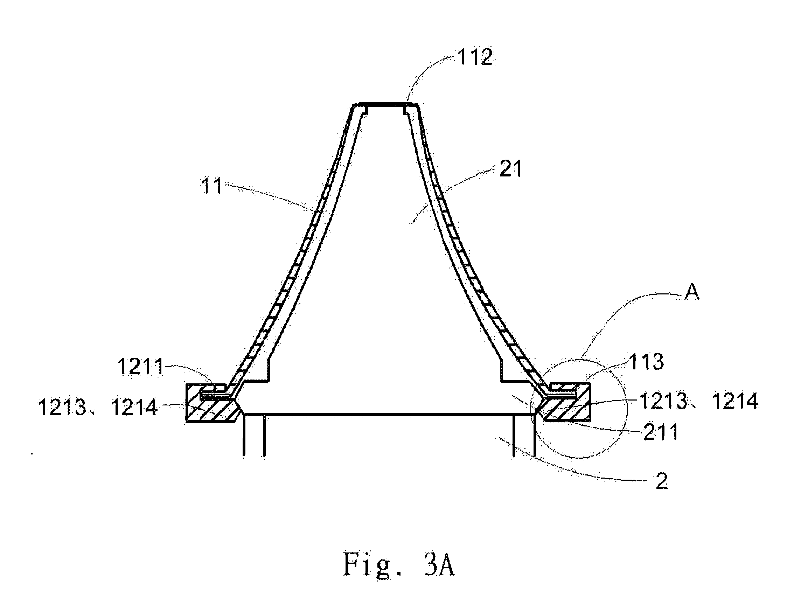

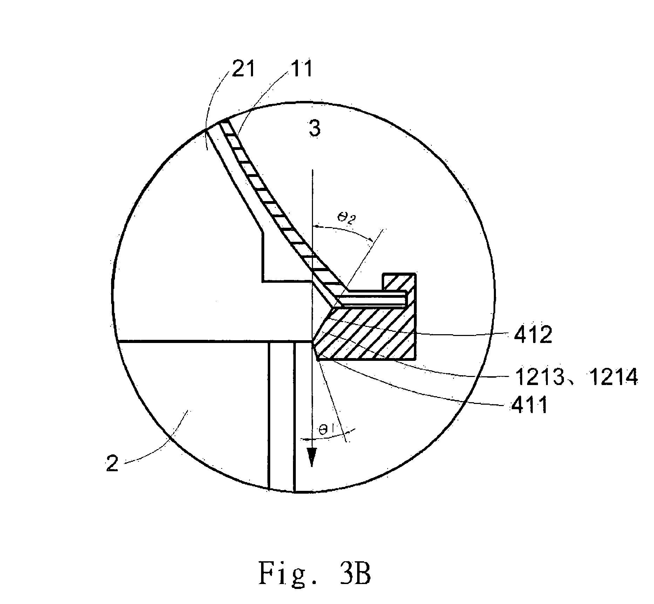

A protrudent device 4 is provided on the opening 122 of the base plate 121 of the base 12. The protrudent device 4 is at lest two said protrusions 41. Besides, the diameter of the opening 122 formed at the center of the base plate 121 is smaller than the diameter of the open end 111 of the main body 11 so that when the probe cover 1 is mounted onto the measuring probe 21 of the ear thermometer, the combining mechanism 211 disposed at the bottom of the measuring probe 21 of the ear thermometer can be further inlaid between the opening 122 formed at the center of the base plate 121 and the protrusions 41 of the base 12 so as to achieve combination between the probe cover 1 and the measuring probe 21. The protrusions 41 can be positioned symmetrically on the base 12 or can be deposited on the base 12 with unequal distances threbetween, wherein it is most preferred that the protrusions 41 are positioned symmetrically on the base 12. Now referring to Figs. 3A and 3B, a guiding surface 411 toward the base 12 is further provided on each said protrusion 41; a retaining surface 412 toward the main body 11 is further provided on each said protrusion 41. The guiding surface 411 and the retaining surface 412 respectively define a first included angle θ1 and a second included angle 62 with respect to an assembling direction 3, wherein the first included angle θ1 is smaller than the second included angle θ2 when the probe cover 1 is mounted onto the measuring probe 21 of the ear thermometer 2 along the assembling direction 3. Thereupon, the probe cover 1 can be mounted onto the measuring probe 21 of the ear thermometer 2 with enhanced smoothness and firmness, so as to achieve combination between the probe cover 1 and the measuring probe 21. As in the probe cover 1, the distance between the retaining surface 412 and the closed end 112 is smaller than that between the combining mechanism 211 and the end of the measuring probe 21, after the probe cover 1 is mounted onto the measuring probe 21 and when the combining mechanism 211 disposed at the bottom of the measuring probe 21 of the ear thermometer 2 abuts on the retaining surface 412, the main body 11 can be expanded and deformed because the distance between the combining mechanism 211 and the end of the measuring probe 21 is greater than that between the retaining surface 412 and the closed end 112. Consequently, the closed end 112 can present a smooth surface that allows infrared rays stably pierce therethrough in order to ensure that the ear thermometer 2 obtains measuring results with less inaccuracy.

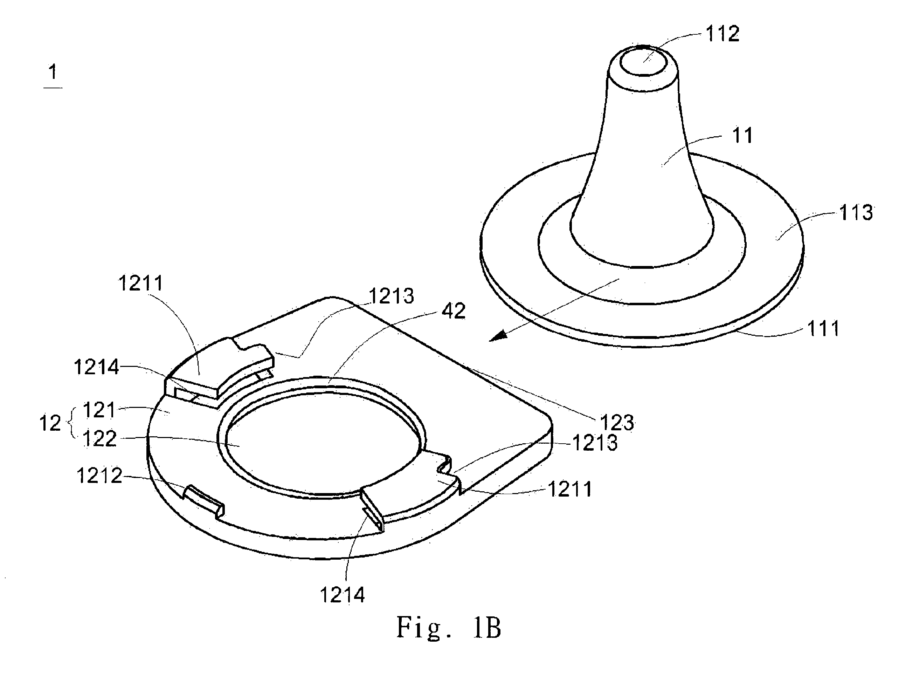

The present invention further provides a second embodiment. Please refer to Fig. 1B through Fig. 4, another probe cover 1 for an ear thermometer is provided. The probe cover 1 comprises a main body 11, a base 12, an open end 111, a closed end 112, a flange 113, a base plate 121, an opening 122, and a protrudent ring 42. In such case, a combining mechanism 211 can be formed as protrudent members or an annular shape, whereby a measuring probe 21 of an ear thermometer can be inlaid between the opening 122 formed at the center of the base plate 121 and the protrudent ring 42 of the base 12 of the probe cover 1 so as to achieve combination between the probe cover 1 and the measuring probe 21. Other characteristics of the probe cover 1 are substantially the same as those disclosed in the first embodiment.

The present invention further provides a third embodiment related to a manufacturing method for the probe cover 1 according to the first embodiment. The disclosed method comprises: (1) providing a main body 11, which is integrally made of plastic in one piece construction and has at least one flange 113 extended radially from an open end 111 of the main body 11; and (2) providing a base 12, which comprises a base plate 121 and an opening 122 formed at the center of the base plate 121, wherein the opening 122 is positionally corresponding to the open end 111 of the main body 11 and the base 12 is formed with at least one entrance 1213 for allowing the flange 113 of the main body 11 to be inlaid in the base 12. Therein, the combining mechanism 211 provided at a bottom of a measuring probe 21 of the ear thermometer is of an annular structure (referring to Fig. 2A) whereby the combining mechanism 211 can restrain the measuring probe 21 of the ear thermometer between the opening 122 formed at the center of the base plate 121 and protrusions 41 of the base 12 of the probe cover 1 so as to achieve combination between the probe cover 1 and the measuring probe 21 of the ear thermometer. Other characteristics of the probe cover 1 are substantially the same as those disclosed in the first embodiment.

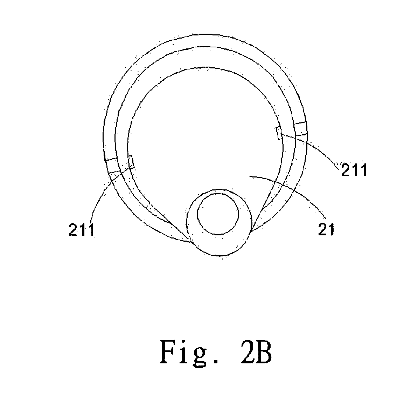

The present invention further provides a fourth embodiment related to a manufacturing method for another probe cover 1 according to the second embodiment. The disclosed method comprises: (1) providing a main body 11, which is integrally made of plastic in one piece construction and has at least one flange 113 extended radially from an open end 111 of the main body 11; and (2) providing a base 12, which comprises a base plate 121 and an opening 122 formed at the center of the base plate 121, wherein the opening 122 is positionally corresponding to the open end 111 of the main body 11 and the base 12 is formed with at least one entrance 1213 for allowing the flange 113 of the main body 11 to be inlaid in the base 12. Therein, a combining mechanism 211 provided at a bottom of a measuring probe of the ear thermometer is formed as protrudent members (referring to Fig. 2B) or of an annular structure (referring to Fig. 2A) whereby the measuring probe 21 of the ear thermometer can be inlaid between the opening 122 formed at the center of the base plate 121 and a protrudent ring 42 of the base 12 of the probe cover 1 so as to achieve combination between the probe cover 1 and the measuring probe 21 of the ear thermometer. Other characteristics of the probe cover 1 are substantially the same as those disclosed in the first embodiment.

Although the particular embodiments of the invention have been described in detail for purposes of illustration, it will be understood by one of ordinary skill in the art that numerous variations will be possible to the disclosed embodiments without going outside the scope of the invention as disclosed in the claims.

## Claims

1. A detachable probe cover (1) for an ear thermometer (2) which is to be mounted onto a measuring probe of the ear thermometer, comprising a main body (11) of a hollow structure and a base (12), in which the main body (11) has an open end (111) and a closed end (112) opposite to the open end (111), and the hollow structure of the main body (11) has a diameter gradually reducing from the open end (111) toward the closed end (112), which is **characterized in**:
the main body (11) being made of a plastic material in one piece construction and having at least one flange (113) radially extended outward from the open end (111), wherein the hollow structure of the main body (11) is shaped as a short truncated cone, the hollow structure of the main body (11) having a thickness of plastic decreasing gradually from the open end (111) toward the closed end (112), so that the closed end (112) is the thinnest portion of the detachable probe cover (1),
the base (12) comprising a base plate (121), a guiding edge (123) and an opening (122) formed at the center of the base plate (121), in which the opening (122) is corresponding to the open end (111) of the main body (11), when the main body (11) is inlaid into the base (12); and
the base plate (121) comprising a pair of retaining recesses (1211), wherein an entrance (1213) is formed at one end of each retaining recess (1211), the pair of retaining recesses (1211) being symmetrically disposed on the base plate (121), so that the flange (113) is allowed to enter and be inlaid in the base (12) through the entrances (1213), wherein after the flange (113) of the main body (11) is inlaid in the base (12), the main body (11) is allowed to slightly shift its position with respect to the opening (122) of the base plate (121), so that when the detachable probe cover is to be mounted onto the measuring probe of the ear thermometer, since the main body can shift slightly, the detachable probe cover (1) can be smoothly mounted onto the measuring probe of the ear thermometer.

2. The detachable probe cover (1) of Claim 1, wherein the distance between the pair of entrances (1213) is smaller than the maximum diameter of the flange (113) of the main body (11), and the distance between two rear ends (1214) of the retaining recesses (1211) is smaller than the distance between the pair of entrances (1213) so as to retain the flange (113) of the inlaid main body (11) from moving.

3. The detachable probe cover (1) of Claim 1, wherein the base plate (121) of the base (12) is provided on its opening (122) with a protrudent device (4), wherein the protrudent device (4) comprises at least two protrusions (41) being positioned symmetrically on the base (12) or deposited on the base with an equal distances therebetween.

4. The detachable probe cover (1) of Claim 1, wherein the base plate (121) of the base (12) is provided on its opening (122) with a protrudent device (4), wherein the protrudent device (4) comprises at least one protrudent ring (42).

5. The detachable probe cover (1) of Claim 3 or 4, wherein the protrudent device (4) is provided with a guiding surface (411) toward the base (12) and a retaining surface (412) toward the main body (11), in which the guiding surface (411) and the retaining surface (412) respectively define a first included angle (θ1) and a second included angle (θ2) with respect to an assembling direction (3) wherein the first included angle (θ1) is smaller than the second included angle (θ2).

6. The detachable probe cover (1) of Claim 1, wherein the diameter of the opening (122) formed at the center of the base (12) is smaller than the diameter of the open end (111) of the main body (11)

7. The detachable probe cover (1) of Claim 1, wherein the main body (11) is made of a material selected from the group consisting of polyethylene (PE), polypropylene (PP), polycarbonate (PC), polystyene (PS), poly ethylene terephthalate (PET) and poly vinyl chloride (PVC) that infrared rays can be transmitted therethrough.

## Patentansprüche

1. Abnehmbare Sensorabdeckung (1) für ein Ohrthermometer (2), die auf einen Messsensor des Oberthermometers befestigt wird und die einen Hauptkörper (11) mit hohler Struktur und eine Basis (12) umfasst, wobei der Hauptkörper (11) ein offenes Ende (111) und ein geschlossenes Ende (112) gegenüber dem offenen Ende (111) umfasst und wobei die hohle Struktur des Hauptkörpers (11) einen Durchmesser aufweist, der sich allmählich vom offenen Ende (111) zum geschlossen Ende (112) hin verringert, **dadurch gekennzeichnet, dass**: der Hauptkörper (11) einstückig aus Kunststoff hergestellt ist und wenigstens einen Flansch (113) umfasst, der sich radial nach außen von dem offenen Ende (111) erstreckt, wobei die hohle Struktur des Körpers (11) als ein kurzer abgeschnittener Kegel ausgebildet ist und eine Dicke des Kunststoffes aufweist, die sich allmählich von dem offenen Ende (111) zu dem geschlossen Ende (112) hin verringert, so dass das geschlossene Ende (112) der kleinste Teil der abnehmbaren Sensorabdeckung (1) ist, die Basis (12) eine Basisplatte (121), einen Führungsrand (123) und eine in der Mitte der Basisplatte (121) ausgebildete Öffnung (122) umfasst, wobei die Öffnung (122) dem offenen Ende (111) des Hauptkörpers (11) entspricht, wenn der Hauptkörper (11) in die Basis (12) eingeschoben ist, und
die Basisplatte (121) ein Paar Halteausnehmungen (1211) umfasst, wobei ein Eingang (1213) an einem Ende jeder Halteausnehmung (1211) ausgebildet ist, wobei das Paar Halteausnehmungen (1211) symmetrisch auf der Basisplatte (121) angeordnet ist, so dass der Flansch (113) in die Basis (12) durch die Eingänge (1213) eingeführt und eingeschoben werden kann, wobei, nachdem der Flansch (113) des Hauptkörpers (11) in die Basis (12) eingeschoben ist, es dem Hauptkörper (11) möglich ist, in der Position in Bezug auf die Öffnung (122) der Basisplatte (121) ein wenig zu verrutschen, so dass, wenn die abnehmbare Sensorabdeckung auf den Messsensor eines Ohrthermometer befestigt werden soll, die abnehmbare Sensorabdeckungen (1) leichtgängig auf der Messsonde des Ohrthermometers befestigt werden kann, da der Hauptkörper ein wenig rutschen kann.

2. Abnehmbare Sensorabdeckung (1) nach Anspruch 1, wobei der Abstand zwischen dem Paar von Eingängen (1213) kleiner ist als der maximale Durchmesser des Flansches (113) des Hauptkörpers (11) und wobei die Distanz zwischen den zwei hinteren Enden (1214) der Halteausnehmungen (1211) kleiner ist als die Distanz zwischen dem Paar von Eingängen (1213), so dass der Flansch (113) des eingeschobenen Hauptkörpers (11) davon abgehalten wird, sich zu bewegen.

3. Abnehmbare Sensorabdeckung (1) nach Anspruch 1, wobei die Basisplatte (121) der Basis (12) an ihrer Öffnung (122) mit einer vorstehenden Vorrichtung (4) versehen ist, wobei die vorstehende Vorrichtung (4) wenigstens zwei Vorsprünge (41) umfasst, wobei diese symmetrisch auf der Basis (12) angeordnet sind oder mit unterschiedlichen Abständen untereinander auf der Basis angeordnet sind.

4. Abnehmbare Sensorabdeckung (1) nach Anspruch 1, wobei die Basisplatte (121) der Basis (12) an ihrer Öffnung (132) mit einer vorstehenden Vorrichtung (4) versehen ist, wobei die vorstehende Vorrichtung (4) wenigstens einen vorstehenden Ring (42) umfasst.

5. Abnehmbare Sensorabdeckung (1) nach Anspruch 3 oder 4, wobei die vorstehende Vorrichtung (4) mit einer Führungsfläche (411) in Richtung der Basis (12) und einer Rückhaltefläche (412) in Richtung des Hauptkörpers (11) versehen ist, wobei die Führungsfläche (411) und die Rückhaltefläche (412) entsprechend einen ersten eingeschlossenen Winkel (θ1) und einen zweiten eingeschlossenen Winkel (θ2) in Bezug auf die Anordnungsausrichtung (3) definieren, wobei der erste eingeschlossene Winkel (θ1) kleiner ist als der zweite eingeschlossene Winkel (θ2).

6. Abnehmbare Sensorabdeckungen (1) nach Anspruch 1, wobei der Durchmesser der in der Mitte der Basis (12) ausgebildeten Öffnung (122) kleiner ist als der Durchmesser des offenen Endes (111) des Hauptkörpers (11).

7. Abnehmbare Sensorabdeckung (1) nach Anspruch 1, wobei der Hauptkörper (11) aus einem Material hergestellt ist, das aus der Gruppe ausgewählt wurde, die Polyethylen (PE), Polypropylen (PP), Polycarbonat (PC), Polystyrol (PS), Polyethylenterephthalat (PET) und Polyvinylchlorid (PVC) umfasst, so dass Infrarotstrahlen transmittieren können.

## Revendications

1. Couvre-sonde détachable pour un thermomètre auriculaire (2) qui doit être monté sur une sonde de mesure du thermomètre auriculaire comprenant un corps principal (11) d'une structure creuse et une base (12), le corps principal (11) ayant une extrémité ouverte (111) et une extrémité fermée (112) opposée à l'extrémité ouverte (111) et la structure creuse du corps principal (11) ayant un diamètre qui se réduit graduellement de l'extrémité ouverte (111) vers l'extrémité fermée (112) qui est **caractérisé par** :
le corps principal (11) fabriqué en un matériau plastique en une construction monobloc et ayant au moins une bride (113) qui s'étend radialement vers l'extérieur à partir de l'extrémité ouverte (111), la structure creuse du corps principal (11) étant formée comme un cône tronqué court, la structure creuse du corps principal (11) ayant une épaisseur de plastique qui diminue graduellement de l'extrémité ouverte (111) vers l'extrémité fermée (112) si bien que l'extrémité fermée (112) est la portion la plus mince du couvre-sonde détachable (1),
la base (12) comprenant une plaque de base (121), un bord de guidage (123) et une ouverture (122) formée au centre de la plaque de base (121), l'ouverture (122) correspondant à l'extrémité ouverte (111) du corps principal (11) lorsque le corps principal (11) est inséré dans la base (12) et
la plaque de base (121) comprenant une paire d'évidements de retenue (1211), une entrée (1213) étant formée à une extrémité de chaque évidement de retenue (1211), la paire d'évidements de retenue (1211) étant placée symétriquement sur la plaque de base (121) si bien que la bride (113) peut entrer et être insérée dans la base (12) par les entrées (1213), ce après quoi la bride (113) du corps principal (11) est insérée dans la base (12), le corps principal (11) peut légèrement changer sa position par rapport à l'ouverture (122) de la plaque de base (121) si bien que lorsque le couvre-sonde détachable doit être monté sur la sonde de mesure du thermomètre auriculaire, vu que le corps principal peut se déplacer légèrement, le couvre-sonde détachable (1) peut être monté sans à-coups sur la sonde de mesure du thermomètre auriculaire.

2. Couvre-sonde détachable (1) selon la revendication 1, la distance entre la paire d'entrées (1213) étant plus petite que le diamètre maximal de la bride (113) du corps principal (11) et la distance entre deux extrémités postérieures (1214) des évidements de retenue (1211) étant plus petite que la distance entre la paire d'entrées (1213) de manière à empêcher la bride (113) du corps principal inséré (11) de se déplacer.

3. Couvre-sonde détachable (1) selon la revendication 1, la plaque de base (121) de la base (12) étant pourvue sur son ouverture (122) d'un dispositif en saillie (4), le dispositif en saillie (4) comprenant au moins deux saillies (41) qui sont positionnées symétriquement sur la base (12) ou déposées sur la base avec des distances inégales entre elles.

4. Couvre-sonde détachable (1) selon la revendication 1, la plaque de base (121) de la base (12) étant pourvue sur son ouverture (122) d'un dispositif en saillie (4), le dispositif en saillie (4) comprenant au moins un anneau en saillie (42).

5. Couvre-sonde détachable (1) selon la revendication 3 ou 4, le dispositif en saillie (4) étant équipé d'une surface de guidage (411) vers la base (12) et d'une surface de retenue (412) vers le corps principal (11), la surface de guidage (411) et la surface de retenue (412) définissant respectivement un premier angle inclus (θ1) et un second angle inclus (θ2) par rapport à un sens d'assemblage (3) lorsque le premier angle inclus (θ1) est plus petit que le second angle inclus (θ2).

6. Couvre-sonde détachable (1) selon la revendication 1, le diamètre de l'ouverture (122) formée au centre de la base (12) étant plus petit que le diamètre de l'extrémité ouverte (111) du corps principal (11).

7. Couvre-sonde détachable (1) selon la revendication 1, le corps principal (11) étant fabriqué en un matériau sélectionné dans le groupe comprenant le polyéthylène (PE), le polypropylène (PP), le polycarbonate (PC), le polystyrène (PS), le polytéréphtalate d'éthylène (PET) et le chlorure de polyvinyle (PVC) à travers lequel les rayons infrarouges peuvent être transmis.
